(19) Europäisches Patentamt
European Patent Office
Office européen des brevets

(11) **EP 3 722 830 B1**

(12) **FASCICULE DE BREVET EUROPEEN**

(45) Date de publication et mention de la délivrance du brevet:
**29.11.2023 Bulletin 2023/48**

(21) Numéro de dépôt: **20169176.3**

(22) Date de dépôt: **10.04.2020**

(51) Classification Internationale des Brevets (IPC):
**G01S 13/42** *(2006.01)*    **G01S 13/91** *(2006.01)*
**G06N 3/08** *(2023.01)*    **G08G 5/00** *(2006.01)*
**G08G 5/02** *(2006.01)*    **G01S 7/41** *(2006.01)*
**G01S 13/72** *(2006.01)*    **G01S 13/87** *(2006.01)*
**G01S 13/86** *(2006.01)*    G01S 13/90 *(2006.01)*
**G01S 7/40** *(2006.01)*

(52) Classification Coopérative des Brevets (CPC):
**G01S 13/42; G01S 7/414; G01S 7/417;
G01S 13/426; G01S 13/726; G01S 13/867;
G01S 13/872; G06N 3/044; G06N 3/045;
G06N 3/08; G06V 20/00; G08G 5/0026;
G08G 5/0082;** G08G 5/0069

(54) **DISPOSITIF D'IDENTIFICATION D'UN TYPE D'AÉRONEF, PROCÉDÉ D'IDENTIFICATION ET PROGRAMME D'ORDINATEUR ASSOCIÉS**

IDENTIFIZIERUNGSVORRICHTUNG EINES LUFTFAHRZEUGTYPS, ENTSPRECHENDES IDENTIFIZIERUNGSVERFAHREN UND COMPUTERPROGRAMM

DEVICE FOR IDENTIFYING A TYPE OF AIRCRAFT, ASSOCIATED IDENTIFICATION METHOD AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.04.2019 FR 1903932**

(43) Date de publication de la demande:
**14.10.2020 Bulletin 2020/42**

(73) Titulaire: **Thales**
**92400 Courbevoie (FR)**

(72) Inventeurs:
• **CHOPIN, Philippe**
**91883 MASSY Cedex (FR)**
• **BARBARESCO, Frédéric**
**91470 LIMOURS (FR)**
• **JOUABER, Sami**
**91883 MASSY Cedex (FR)**

(74) Mandataire: **Lavoix**
**2, place d'Estienne d'Orves**
**75441 Paris Cedex 09 (FR)**

(56) Documents cités:
• **THAI VAN-PHAT ET AL: "Detection, Tracking and Classification of Aircraft and Drones in Digital Towers Using Machine Learning on Motion Patterns", 2019 INTEGRATED COMMUNICATIONS, NAVIGATION AND SURVEILLANCE CONFERENCE (ICNS), IEEE, 9 avril 2019 (2019-04-09), pages 1-8, XP033560928, DOI: 10.1109/ICNSURV.2019.8735240**
• **MOHAJERIN NIMA ET AL: "Feature extraction and radar track classification for detecting UAVs in civillian airspace", 2014 IEEE RADAR CONFERENCE, IEEE, 19 mai 2014 (2014-05-19), pages 674-679, XP032628051, DOI: 10.1109/RADAR.2014.6875676**
• **SCHUMANN ARNE ET AL: "Deep cross-domain flying object classification for robust UAV detection", 2017 14TH IEEE INTERNATIONAL CONFERENCE ON ADVANCED VIDEO AND SIGNAL BASED SURVEILLANCE (AVSS), IEEE, 29 août 2017 (2017-08-29), pages 1-6, XP033233410, DOI: 10.1109/AVSS.2017.8078558**

**Description**

La présente invention concerne un dispositif d'identification d'un type d'aéronef.

L'invention concerne aussi un système de surveillance comprenant un tel dispositif d'identification.

L'invention concerne également un procédé d'identification d'un aéronef.

L'invention concerne également un programme d'ordinateur comportant des instructions logicielles qui, lorsqu'elles sont exécutées par un ordinateur, mettent en oeuvre un tel procédé d'identification.

L'invention concerne le domaine de la surveillance aérienne. L'invention s'applique notamment à des systèmes de contrôle aptes à surveiller de larges zones territoriales par traitement d'informations, reçues par exemples par des systèmes RADAR (de l'anglais *RAdio Detection And Ranging*).

L'article de Thai et al. intitulé « Detection, tracking and classification of aircraft and drones in digital towers using machine learning on motion patterns » décrit la détection, le suivi et la classification d'avions et de drones dans des tours de contrôle, en utilisant un apprentissage machine.

On connaît des dispositifs d'identification comprenant un module de pistage (de l'anglais *tracker*) et un module de classification (de l'anglais *classifier*). Le module de suivi est configuré pour traiter les informations issues des systèmes RADAR pour obtenir des pistes de trajectoire d'aéronefs. Le module de classification est configuré pour classifier, selon des règles de détermination fixes, un type ou une classe d'aéronef.

Cependant, les dispositifs d'identification connus ne sont pas entièrement satisfaisants. En particulier, l'identification du type d'aéronef par les dispositifs d'identification connus est souvent peu précise.

Le but de la présente invention est ainsi de proposer un dispositif d'identification et un procédé associé qui permettent d'identifier le type d'aéronef avec une meilleure précision.

A cet effet, l'invention a pour objet un dispositif d'identification selon la revendication 1.

Selon d'autres aspects avantageux, le dispositif d'identification est selon l'une quelconque des revendications 2 à 6.

L'invention a également pour objet un système de surveillance selon la revendication 7.

L'invention a également pour objet un procédé d'identification selon la revendication 8.

L'invention a également pour objet un produit programme d'ordinateur selon la revendication 9.

Ces caractéristiques et avantages de l'invention apparaîtront à la lecture de la description qui va suivre, donnée uniquement à titre d'exemple non limitatif, et faite en référence aux dessins annexés, sur lesquels :

- [Fig 1] la figure 1 est une représentation schématique d'un système de surveillance comprenant un dispositif d'identification selon l'invention ;

- [Fig 2] la figure 2 est une représentation schématique d'un module de traitement et d'un module de détermination du dispositif d'identification de la figure 1, et

- [Fig 3] la figure 3 est un organigramme d'un procédé d'identification d'un type d'aéronef, selon l'invention.

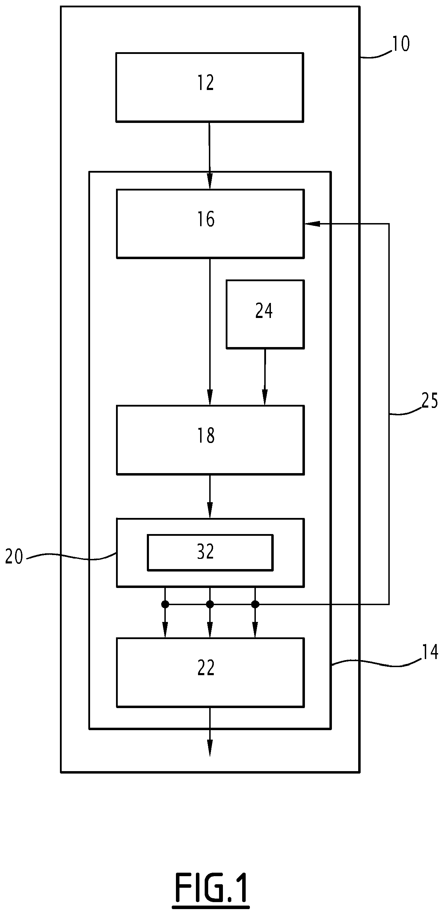

Sur la figure 1, un système de surveillance 10 comprend au moins un capteur d'images 12 et un dispositif d'identification 14 d'un type d'aéronef.

Le système de surveillance 10 est configuré pour surveiller un espace aérien (non représenté). En particulier, le système de surveillance 10 est configuré pour générer des informations relatives à des aéronefs présents à l'intérieur de l'espace aérien. Notamment, le système de surveillance 10 est configuré pour identifier le type d'aéronef parmi un ensemble prédéfini de types d'aéronefs. En particulier, le système de surveillance 10 est configuré pour déterminer le type d'un ou plusieurs aéronefs présents à l'intérieur de l'espace aérien.

Le type d'aéronef est une classe ou catégorie d'aéronef. L'ensemble prédéfini de types d'aéronefs comprend par exemple un avion pressurisé, un avion non-pressurisé, un avion à hélice ou à turboréacteur, un avion supersonique, un hélicoptère, un missile, ou encore un drone. Selon un exemple, un type particulier d'aéronef comprend plusieurs sous-types. Par exemple, un avion à turboréacteur est un avion à fuselage étroit ou un avion à fuselage large.

Selon un exemple, le système de surveillance 10 comprend plusieurs capteurs d'images 12. En variante, le système de surveillance 10 comprend un seul capteur d'images 12.

Le ou chaque capteur d'images 12 est configuré pour prendre des images et générer une série d'images de l'espace aérien. Par exemple, le capteur d'images 12 est un capteur de type RADAR (de l'anglais *RAdio Detection And Ranging*). Selon un exemple, le capteur d'images 12 est un capteur du type radar primaire, également appelé PSR (de l'anglais *Primary Surveillance Radar*) ou un capteur du type radar secondaire, également appelé SSR (de l'anglais *Secondary Surveillance Radar).*

Selon un exemple, le capteur d'images 12 est doté d'un contrôleur (non représenté) configuré pour contrôler le fonctionnement du capteur d'images 12. Par exemple, le contrôleur du capteur d'images 12 est configuré pour définir la position et la taille de l'espace aérien balayé par le capteur d'images 12. Le capteur d'images 12 est en outre configuré pour transmettre, notamment via le contrôleur, la série d'images au dispositif d'identification 14.

Le dispositif d'identification 14 est configuré pour identifier le type d'au moins un aéronef, à partir de la série d'images transmise par le ou les capteurs d'image 12. En particulier, le dispositif d'identification 14 est configuré pour recevoir en entrée la série d'images et pour fournir en sortie le type d'aéronef.

Le dispositif d'identification 14 comprend un module de génération 16, un module de traitement 18, un module de détermination 20 et un module d'identification 22. En complément facultatif, le dispositif d'identification 14 comprend en outre une base d'apprentissage 24 configurée pour stocker des données de trajectoire prédéterminées.

Le module de génération 16 est également appelé pisteur (de l'anglais *tracker*).

Le module de génération 16 est notamment configuré pour recevoir en entrée la série d'images prises par le capteur d'images 12.

Le module de génération 16 est configuré pour générer des données de trajectoire à partir de la série d'images prises par le capteur d'images 12. Les données de trajectoire sont une première variable de sortie du module de génération 16.

En particulier, le module de génération 16 est configuré pour détecter au moins un aéronef présent dans l'espace aérien, appelé « aéronef détecté » dans la suite de la description, et pour suivre l'évolution de l'aéronef détecté dans l'espace aérien. A partir de la série d'images, le module de génération 16 est ainsi configuré pour générer les données de trajectoire comportant un ensemble de paramètre(s) cinématique(s) de l'aéronef détecté. Par exemple, une donnée de trajectoire comprend un vecteur de trajectoire. Le vecteur de trajectoire comporte trois composantes dans l'espace tridimensionnel, à savoir une vitesse, une courbure perpendiculaire à la vitesse, et une torsion perpendiculaire à la vitesse et à la courbure.

Chaque paramètre cinématique, généré par le module de génération 16, est notamment un élément choisi parmi le groupe consistant en une vitesse tridimensionnelle, une courbure tridimensionnelle de la trajectoire de l'aéronef, une torsion tridimensionnelle de la trajectoire de l'aéronef, une vitesse normée dans un plan, une courbure dans un plan, une altitude de l'aéronef, une vitesse verticale de l'aéronef, et/ou une accélération verticale de l'aéronef.

Selon un exemple, les données de trajectoire comprennent uniquement des vitesses tridimensionnelles de l'aéronef détecté, par exemple des vitesses tridimensionnelles normées. Selon un autre exemple, les données de trajectoire comprennent uniquement des vitesses tridimensionnelles de l'aéronef détecté et l'altitude de l'aéronef détecté.

En complément facultatif, le module de génération 16 est en outre configuré pour générer une surface équivalente radar ou RCS (de l'anglais *Radar Cross Section*) à partir des images prises par le capteur d'images 12. La surface équivalente radar est une valeur unidimensionnelle relative à la forme de l'aéronef détecté et à la nature des matériaux constitutifs de l'aéronef détecté. Ainsi, la surface équivalente radar permet de fournir des informations relatives au type de l'aéronef détecté. La surface équivalente radar est une deuxième variable de sortie du module de génération 16.

En complément facultatif, le module de génération 16 est configuré pour recevoir en entrée une donnée relative au type d'aéronef (décrite ci-dessous) parmi l'ensemble prédéfini de types d'aéronefs, notamment provenant du module de détermination 20, comme représenté sur la figure 1 par le lien 25. Selon un exemple, le module de génération 16 est configuré pour choisir, en fonction de la donnée relative au type d'aéronef, un algorithme spécifique pour la génération des données de trajectoire. Par exemple, lorsque la donnée relative au type d'aéronef indique que l'aéronef détecté est un avion de chasse, le module de génération 16 est configuré pour choisir un algorithme apte à suivre des mouvements brusques d'un avion de chasse pour la génération des données de trajectoire.

Le module de traitement 18 est notamment configuré pour prétraiter les données de trajectoire en vue d'une transmission de données de trajectoire traitées au module de détermination 20.

Le module de traitement 18 est par exemple configuré pour recevoir en entrée les données de trajectoire du module de génération 16. En complément ou en variante, le module de traitement 18 est configuré pour recevoir des données de trajectoire prédéfinies de la base d'apprentissage 24. Le module de traitement 18 est de préférence configuré pour fournir en sortie au moins un signal traité comprenant les données de trajectoire traitées en destination du module de détermination 20.

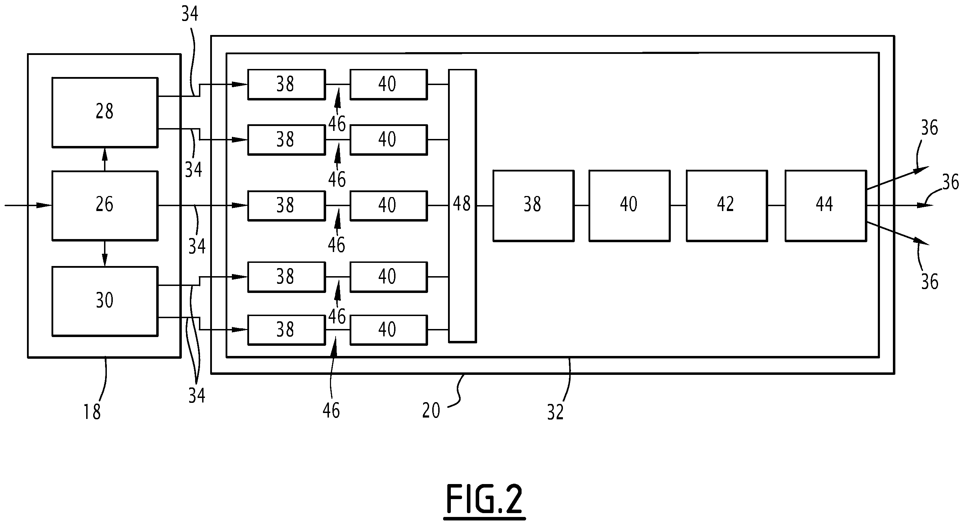

Selon l'exemple de la figure 2, le module de traitement 18 est configuré pour émettre cinq signaux traités. Le ou chaque signal traité est notamment une série temporelle des données de trajectoire.

Le module de traitement 18 est en particulier configuré pour sous-échantillonner les données de trajectoire et pour fournir le signal traité comprenant des données de trajectoire sous-échantillonnées. Par exemple, le module de traitement 18 est configuré pour définir une pluralité de fenêtres temporelles de durées différentes, et pour échantillonner les données de trajectoire sur chaque fenêtre temporelle sur un nombre prédéfini d'échantillons N. Le module de traitement 18 est ainsi configuré pour fournir une information de développement sur le temps des données de trajectoire, en particulier un développement des données de trajectoire sur des durées différentes.

Le module de traitement 18 est par exemple configuré pour filtrer les données de trajectoire selon des fréquences prédéfinies, par exemple via un filtre passe-bande. Selon un exemple, le signal traité comprend ainsi des données de trajectoire filtrées.

Comme visible dans l'exemple de la figure 2, le module de traitement 18 comprend une unité de réception 26 configurée pour recevoir les données de trajectoire. Le module de traitement 18 comprend en outre une unité d'échantillonnage 28 configurée pour recevoir les données de trajectoire de l'unité de réception 26, pour sous-échantillonner les données de trajectoire, et pour fournir le signal traité comprenant des données de trajectoire sous-échantillonnées. En outre, le module de traitement 18 comprend une unité de filtrage 30 configurée pour recevoir les données de trajectoire de l'unité de réception 26, pour filtrer les données de trajectoire selon des fréquences prédéfinies, et pour fournir le signal traité comprenant des données de trajectoire filtrées.

Comme visible sur les figures 1 et 2, le module de traitement 18 est disposé en amont du module de détermination 20. Le module de traitement 18 est ainsi notamment configuré pour fournir en sortie le signal traité comprenant les données de trajectoire traitées en destination du module de détermination 20.

Le module de détermination 20 est également appelé classificateur (ou *classifier* en anglais).

Le module de détermination 20 comprend un réseau de neurones 32, également appelé réseau de neurones artificiels. Le module de détermination 20 est configuré pour déterminer, via le réseau de neurones 32, au moins une donnée relative au type d'aéronef parmi l'ensemble prédéfini de types d'aéronefs. La donnée relative au type d'aéronef comprend par exemple une ou plusieurs probabilités d'appartenance à chacun des types de l'ensemble prédéfini de types d'aéronef.

Selon un exemple, le module de détermination 20 est configuré pour déterminer la probabilité d'appartenance comme suit. L'ensemble prédéfini de types d'aéronefs comprend par exemple un avion à turboréacteur, un drone et un hélicoptère. Le module de détermination 20 est configuré pour recevoir au moins la première variable en entrée, et pour fournir en sortie des probabilités d'appartenance. Par exemple, le module de détermination 20 est configuré pour fournir une probabilité d'appartenance de l'aéronef détecté de 90% au type drone, une probabilité d'appartenance de 5% au type avion à turboréacteur et une probabilité d'appartenance de 5% au type hélicoptère. L'homme du métier comprendra que la somme des probabilités d'appartenance déterminées par le module de détermination 20 est égale à 100%, c'est-à-dire à 1.

Le module d'identification 22 est configuré pour identifier le type d'aéronef en fonction de la donnée relative au type d'aéronef. En particulier, le module d'identification 22 est configuré pour recevoir les probabilités d'appartenance à chacun des types de l'ensemble prédéfini de types d'aéronefs, et pour identifier le type d'aéronef présentant la probabilité la plus élevée parmi les probabilités d'appartenance déterminées. Dans l'exemple précité, le module d'identification 22 est alors configuré pour identifier que l'aéronef détecté est un drone.

Selon un exemple, le module de génération 16, le module de traitement 18, le module de détermination 20 et le module d'identification 22 sont réalisés chacun sous forme d'un logiciel exécutable par un ou plusieurs processeurs (non représentés). Une mémoire (non représentée) du dispositif d'identification 16 est alors apte à stocker un logiciel de génération configuré pour générer au moins les données de trajectoire de l'aéronef détecté, un logiciel de traitement configuré pour prétraiter les données de trajectoire, un logiciel de détermination configuré pour déterminer la donnée relative au type d'aéronef, et un logiciel d'identification configuré pour identifier le type d'aéronef en fonction de la donnée relative au type d'aéronef.

Le ou les processeurs sont alors aptes à exécuter le logiciel de génération, le logiciel de traitement, le logiciel de détermination et le logiciel d'identification.

En variante, le module de génération 16, le module de traitement 18, le module de détermination 20 et le module d'identification 22 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Applications Spécifie Integrated Circuit*).

Le réseau de neurones 32 comporte notamment une pluralité de neurones artificiels organisés en couches successives, à savoir une couche d'entrée, représentée sur la figure 2 par des flèches 34, correspondant à la ou aux variables d'entrée, une couche de sortie, représentée sur la figure 2 par des flèches 36, correspondant à la ou aux variables de sortie, et d'éventuelles couches intermédiaires également appelées couches cachées et disposées entre la couche d'entrée 34 et la couche de sortie 36, comme représenté sur la figure 2. En particulier, le réseau de neurones 32 est configuré pour recevoir au moins la première variable d'entrée et pour fournir en sortie au moins la donnée relative au type d'aéronef. En complément, le réseau de neurones 32 est également configuré pour recevoir la deuxième variable d'entrée.

Le réseau de neurones 32 est notamment un réseau de neurones convolutionnel.

En référence à la figure 2, le réseau de neurones 32 comporte par exemple au moins une couche convolutive 38 comprenant au moins un réseau convolutif et au moins une couche de mémorisation 40. Le ou les réseaux convolutifs présentent au moins un filtre linéaire, dont les paramètres peuvent être appris. Les réseaux convolutifs sont configurés pour extraire des caractéristiques des variables d'entrée, telles qu'une évolution de la première variable sur le temps. La ou les couches de mémorisation 40 comprennent par exemple au moins un réseau de neurones récurrents, tel qu'un réseau de type LTSM (de l'anglais *Long-Short Term Memory*) ou de type GRU (de l'anglais *Gated Récurrent Unit*). Les couches de mémorisation 40 du réseau de neurones 32 sont en particulier configurées pour compresser des informations comprises dans la ou les variables d'entrée, notamment en supprimant l'information redondante dans les variables d'entrée. Par exemple, la ou les couches de mémorisation 40 du réseau de neurones 32 sont configurées pour réduire la variable d'entrée correspondante à une valeur unique, en mémorisant par exemple uniquement la valeur maximale de la variable d'entrée correspondante.

Dans l'exemple de la figure 2, le réseau de neurones 32 comporte chaque couche de mémorisation 40 associée à une couche convolutive 38 précédant cette couche de mémorisation 40. La couche de mémorisation 40 du réseau de neurones 32 est ainsi configurée pour calculer une intensité d'une caractéristique de la variable d'entrée filtrée par le filtre linéaire de la couche convolutive 38 associée.

En complément, le réseau de neurones 32 comprend au moins une couche dense 42 et une couche fonctionnelle 44. La couche dense 42 du réseau de neurones 32 comporte une pluralité de neurones artificiels formant un réseau dense, configuré pour définir une probabilité provisoire d'appartenance de l'aéronef détecté à chaque type d'aéronef à partir d'un signal reçu par les couches précédant la couche dense 42. La couche fonctionnelle 44 du réseau de neurones 32 présente par exemple une fonction exponentielle normalisée (ou *softmax function* en anglais), notamment apte à favoriser la distinction entre les types d'aéronefs, en maximisant notamment une probabilité associée à un type d'aéronef. La fonction exponentielle normalisée est définie comme suit :

$$[\text{Math1}] \quad y_j = \frac{e^{x_j}}{\sum_i e^{x_i}},$$

où $y_j$ représente la probabilité d'appartenance au type j, et $x_j$ représente la probabilité provisoire d'appartenance de l'aéronef au type j.

Selon un exemple du réseau de neurones 32, $y_j$ est ainsi la variable de sortie du réseau de neurones 32.

Un mode de réalisation particulier du réseau de neurones 32 est représenté sur la figure 2. Le réseau de neurones 32 comprend une pluralité de branches 46 parallèles en elles comprenant chacune une couche convolutive 38 et une couche de mémorisation 40 associée à la couche convolutive 38 précédant cette couche de mémorisation 40. Le réseau de neurones 32 selon le mode de réalisation de la figure 2 comprend en outre une unité de concaténation 48 configurée pour combiner des signaux issus de chaque branche 46 en un signal unique. Le réseau de neurones 32 comprend en outre, connectées en série en aval de l'unité de concaténation 48, une couche convolutive 38, une couche de mémorisation 40, une couche dense 42 et une couche fonctionnelle 44.

D'autres modes de réalisation du réseau de neurones 32 sont envisageables. Par exemple, le réseau de neurones 30 comprend, en série, une couche convolutive 38, une couche de mémorisation 40, une couche convolutive 38, une couche de mémorisation 40, une couche dense 42 et une couche fonctionnelle 44.

L'apprentissage du réseau de neurones 32 est de préférence supervisé. Il utilise alors, par exemple, un algorithme de rétropropagation du gradient d'erreur, tel qu'un algorithme fondé sur la minimisation d'un critère d'erreur en utilisant une méthode dite de descente du gradient.

L'apprentissage supervisé du réseau de neurones 32 est notamment effectué en lui fournissant en variable(s) d'entrée au moins les données de trajectoire de l'aéronef et en variable(s) de sortie la ou les données relatives au type d'aéronef correspondant à l'aéronef dont les données de trajectoire sont fournies en entrée.

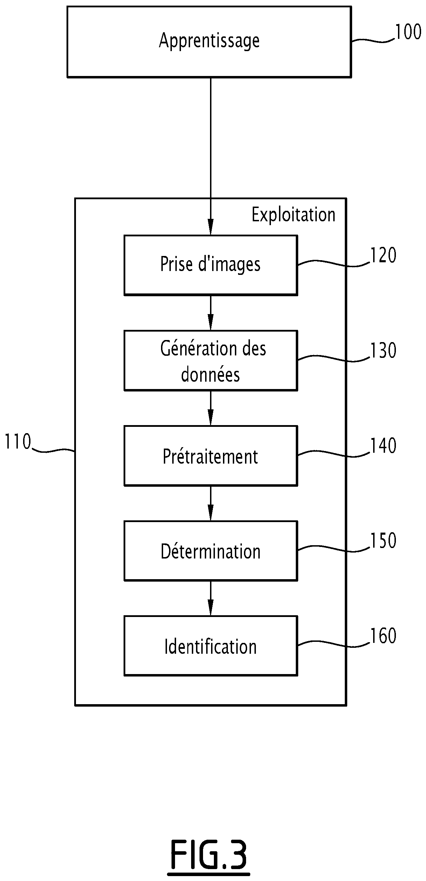

Le fonctionnement du système de surveillance 10 selon l'invention, en particulier de son dispositif d'identification 14, va être à présent décrit à l'aide de la figure 3 illustrant un organigramme du procédé d'identification selon l'invention, mis en oeuvre par ordinateur.

Le procédé comprend notamment une phase d'apprentissage 100 et une phase d'exploitation 110.

Lors de la phase d'apprentissage 100, le dispositif d'identification 14, et en particulier le réseau de neurones 32, est entraîné, ce qui est notamment effectué en lui fournissant en variable(s) d'entrée au moins les données de trajectoire de l'aéronef et en variable(s) de sortie la ou les données relatives au type d'aéronef correspondant à l'aéronef, dont les données de trajectoire sont fournies en entrée.

Par exemple, le réseau de neurones 32 reçoit, éventuellement via le module de traitement 18, les données de trajectoire prédéterminées de la base d'apprentissage, et reçoit en outre la ou les données relatives au type correspondant.

De préférence, la phase d'apprentissage 100 est mise en oeuvre au moins une fois avant la mise en oeuvre de la phase d'exploitation 110.

Lors de phase d'exploitation 110, le dispositif d'identification 14 identifie le type d'aéronef sur la base de la série d'images prises par le capteur d'images 12.

Lors d'une étape initiale 120 de la phase d'exploitation 110, le ou chaque capteur d'images 12 prend des images et génère la série d'images de l'espace aérien. En particulier, le contrôleur (non représenté) du capteur d'images 12 contrôle le fonctionnement du capteur d'images 12. Par exemple, le contrôleur définit la position et la taille de l'espace aérien balayé par le capteur d'images 12. Le capteur d'images 12 transmet, notamment via le contrôleur, la série d'images au dispositif d'identification 14.

Le dispositif d'identification 14 identifie ensuite le type d'au moins un aéronef, notamment sur la base de la série d'images reçue en entrée.

En particulier, lors de l'étape suivante 130 de la phase d'exploitation 110, le module de génération 16 du dispositif d'identification 14 génère les données de trajectoire à partir de la série d'images prises par le capteur d'images 12. En particulier, le module de génération 16 détecte au moins un aéronef présent dans l'espace aérien, et suit l'évolution de l'aéronef détecté dans l'espace aérien.

En complément facultatif, le module de génération 16 génère en outre la surface équivalente radar de l'aéronef détecté à partir des images prises par le capteur d'images 12.

Lors de l'étape suivante 140 de la phase d'exploitation 110, le module de traitement 18 prétraite les données de trajectoire au vu d'une transmission des données de trajectoire au module de détermination 20. En particulier, le module de traitement 18 reçoit en entrée les données de trajectoire du module de génération 16, et fournit en sortie au moins le signal traité comprenant les données de trajectoire traitées à destination du module de détermination 20. Par exemple, le module de traitement 18 émet cinq signaux traités, et le ou chaque signal traité est notamment une série temporelle des données de trajectoire.

En particulier, le module de traitement 18 sous-échantillonne les données de trajectoire et fournit le signal traité comprenant des données de trajectoire sous-échantillonnées. Par exemple, le module de traitement 18 définit une pluralité de fenêtres temporelles de durées différentes, et échantillonne les données de trajectoire sur chaque fenêtre temporelle sur un nombre d'échantillons N prédéfini. Le module de traitement 18 fournit ainsi une information de développement sur le temps des données de trajectoire, en particulier un développement des données de trajectoire sur des durées différentes.

Le module de traitement 18 filtre en outre les données de trajectoire selon des fréquences prédéfinies, par exemple par un filtre passe-bande. Le signal traité comprend ainsi des données de trajectoire filtrées.

Lors de l'étape suivante 150 de la phase d'exploitation 110, le module de détermination 20 détermine, via le réseau de neurones 32, au moins la donnée relative au type d'aéronef parmi l'ensemble prédéfini de types d'aéronefs. Par exemple, le module de détermination 20 détermine la probabilité d'appartenance comme suit. L'ensemble prédéfini de types d'aéronefs comprend par exemple un avion à turboréacteur, un drone et un hélicoptère. Le module de détermination 20 reçoit au moins la première variable en entrée, et fournit en sortie des probabilités d'appartenance. Par exemple, le module de détermination 20 fournit une probabilité d'appartenance de l'aéronef détecté de 90% au type drone, une probabilité d'appartenance de 5% au type avion à turboréacteur et une probabilité d'appartenance de 5% au type hélicoptère.

Lors de l'étape suivante 160 de la phase d'exploitation 110, le module d'identification 22 identifie le type d'aéronef en fonction de la donnée relative au type d'aéronef. En particulier, le module d'identification 22 reçoit les probabilités d'appartenance à chacun des types de l'ensemble prédéfini de types d'aéronefs, et identifie le type d'aéronef présentant la probabilité la plus élevée parmi les probabilités d'appartenance. Dans l'exemple précité, le module d'identification 22 identifie que l'aéronef détecté est un drone.

On conçoit ainsi que le dispositif d'identification 14 et le procédé d'identification selon l'invention permettent d'identifier le type d'aéronef avec une meilleure précision. Grâce au réseau de neurones 32, le dispositif d'identification 14 est en outre facilement adaptable, par exemple pour des types d'aéronefs particuliers.

Le module de traitement 18 fournit ainsi une information de développement sur le temps des données de trajectoire, en particulier un développement des données de trajectoire sur des durées différentes.

Le module de traitement 18 filtre en outre les données de trajectoire selon des fréquences prédéfinies, par exemple par un filtre passe-bande. Le signal traité comprend ainsi des données de trajectoire filtrées.

Lors de l'étape suivante 150 de la phase d'exploitation 110, le module de détermination 20 détermine, via le réseau de neurones 32, au moins la donnée relative au type d'aéronef parmi l'ensemble prédéfini de types d'aéronefs. Par exemple, le module de détermination 20 détermine la probabilité d'appartenance comme suit. L'ensemble prédéfini de types d'aéronefs comprend par exemple un avion à turboréacteur, un drone et un hélicoptère. Le module de détermination 20 reçoit au moins la première variable en entrée, et fournit en sortie des probabilités d'appartenance. Par exemple, le module de détermination 20 fournit une probabilité d'appartenance de l'aéronef détecté de 90% au type drone, une probabilité d'appartenance de 5% au type avion à turboréacteur et une probabilité d'appartenance de 5% au type hélicoptère.

Lors de l'étape suivante 160 de la phase d'exploitation 110, le module d'identification 22 identifie le type d'aéronef en fonction de la donnée relative au type d'aéronef. En particulier, le module d'identification 22 reçoit les probabilités d'appartenance à chacun des types de l'ensemble prédéfini de types d'aéronefs, et identifie le type d'aéronef présentant la probabilité la plus élevée parmi les probabilités d'appartenance. Dans l'exemple précité, le module d'identification 22 identifie que l'aéronef détecté est un drone.

On conçoit ainsi que le dispositif d'identification 14 et le procédé d'identification selon l'invention permettent d'identifier le type d'aéronef avec une meilleure précision. Grâce au réseau de neurones 32, le dispositif d'identification 14 est en outre facilement adaptable, par exemple pour des types d'aéronefs particuliers.

**Revendications**

1. Dispositif d'identification (14) d'un type d'aéronef comportant :

- un module de détermination (20) configuré pour déterminer, via un réseau de neurones (32), au moins une donnée relative à un type d'aéronef parmi un ensemble prédéfini de types d'aéronefs, une variable d'entrée du réseau de neurones (32) comprenant des données de trajectoire d'un aéronef détecté, au moins une variable de sortie du réseau de neurones (32) étant la donnée relative au type d'aéronef, et
- un module d'identification (22) configuré pour identifier le type d'aéronef en fonction de la donnée relative au type d'aéronef,

- un module de traitement (18), disposé en amont du module de détermination (20), le module de traitement (18) étant configuré pour définir une pluralité de fenêtres temporelles de durées différentes, et pour échantillonner les données de trajectoire sur chaque fenêtre temporelle sur un nombre prédéfini d'échantillons N,

le dispositif d'identification (14) comprenant en outre un module de génération (16) configuré pour générer les données de trajectoire de l'aéronef détecté à partir d'une série d'images prises par un capteur d'images (12).

2. Dispositif d'identification (14) selon la revendication 1, dans lequel les données de trajectoire comportent un ensemble de paramètre(s) cinématique(s) de l'aéronef détecté, chaque paramètre cinématique étant un élément choisi parmi le groupe consistant en :

- une vitesse tridimensionnelle;
- une courbure tridimensionnelle de la trajectoire de l'aéronef détecté ;
- une torsion tridimensionnelle de la trajectoire de l'aéronef détecté ;
- une vitesse normée dans un plan ;
- une courbure dans un plan ;
- une altitude de l'aéronef détecté ;
- une vitesse verticale de l'aéronef détecté ;
- une accélération verticale de l'aéronef détecté.

3. Dispositif d'identification (14) selon la revendication 1 ou 2, dans lequel une variable d'entrée du réseau de neurones (32) est une surface équivalente radar de l'aéronef détecté.

4. Dispositif d'identification (14) selon l'une quelconque des revendications précédentes, dans lequel le module de traitement (18) est configuré pour sous-échantillonner des données de trajectoire et pour fournir au moins un signal traité comprenant des données de trajectoire sous-échantillonnées.

5. Dispositif d'identification (14) selon la revendication 4, dans lequel le module de traitement (18) est configuré pour filtrer des données de trajectoire selon des fréquences prédéfinies, le signal traité comprenant en outre des données de trajectoire filtrées.

6. Dispositif d'identification (14) selon l'une quelconque des revendications précédentes, dans lequel la donnée relative au type d'aéronef comprend une probabilité d'appartenance à chacun des types de l'ensemble prédéfini de types d'aéronefs.

7. Système de surveillance (10) comprenant un dispositif d'identification (14) selon l'une quelconque des revendications précédentes, le système de surveillance (10) comprenant en outre au moins un capteur d'images (12) configuré pour prendre une série d'images d'un espace aérien et pour transmettre la série d'images au dispositif d'identification (14).

8. Procédé d'identification d'un type d'aéronef, le procédé d'identification étant mis en oeuvre par un dispositif d'identification (14), et comprenant :

- la définition d'une pluralité de fenêtres temporelles de durées différentes, et l'échantillonnage des données de trajectoire sur chaque fenêtre temporelle sur un nombre prédéfini d'échantillons N ;
- la génération de données de trajectoire d'un aéronef détecté à partir d'une série d'images prises par un capteur d'images (12);
- la détermination, via un réseau de neurones (32), d'au moins une donnée relative à un type d'aéronef parmi un ensemble prédéfini de types d'aéronefs, une variable d'entrée du réseau de neurones (32) comprenant les données de trajectoire de l'aéronef détecté, au moins une variable de sortie du réseau de neurones (32) étant la donnée relative au type d'aéronef, et
- l'identification le type d'aéronef en fonction de la donnée relative au type d'aéronef.

9. Programme d'ordinateur comportant des instructions logicielles qui, lorsqu'elles sont exécutées par un ordinateur, mettent en oeuvre un procédé d'identification d'un type d'aéronef selon la revendication précédente et qui est mis en oeuvre par un dispositif d'identification selon les revendications 1 à 7.

**Patentansprüche**

1. Vorrichtung zur Identifizierung (14) eines Luftfahrzeugtyps, umfassend:

- ein Bestimmungsmodul (20), das dazu ausgelegt ist, über ein neuronales Netz (32) mindestens eine Angabe zu einem Luftfahrzeugtyp aus einer vorbestimmten Gruppe von Luftfahrzeugtypen zu bestimmen, wobei eine Eingangsvariable des neuronalen Netzes (32) Flugbahndaten eines erfassten Luftfahrzeugs umfasst, wobei mindestens eine Ausgangsvariable des neuronalen Netzes (32) die Angabe zu dem Luftfahrzeugtyp ist, und
- ein Identifikationsmodul (22), das dazu ausgelegt ist, den Luftfahrzeugtyp in Abhängigkeit von der Angabe zu dem Luftfahrzeugtyp zu identifizieren,
- ein Verarbeitungsmodul (18), das dem Bestimmungsmodul (20) vorgelagert angeordnet ist, wobei das Verarbeitungsmodul (18) dazu ausgelegt ist, eine Vielzahl von Zeitfenstern mit unterschiedlicher Dauer festzulegen und die Flugbahndaten in jedem Zeitfenster über eine vorbestimmte Anzahl von Abtastungen N abzutasten,

wobei die Identifikationsvorrichtung (14) ferner ein Generierungsmodul (16) umfasst, das dazu ausgelegt ist, die Flugbahndaten des erfassten Luftfahrzeugs aus einer Reihe von Bildern zu generieren, die von einem Bildsensor (12) aufgenommen wurden.

**2.** Identifikationsvorrichtung (14) nach Anspruch 1, wobei die Flugbahndaten eine Gruppe kinematischer Parameter des erfassten Luftfahrzeugs aufweisen, wobei jeder kinematische Parameter ein Element ist, das aus der Gruppe ausgewählt ist, die besteht aus:

- einer dreidimensionalen Geschwindigkeit;
- einer dreidimensionalen Krümmung der Flugbahn des erfassten Luftfahrzeugs;
- einer dreidimensionalen Verdrehung der Flugbahn des erfassten Luftfahrzeugs;
- einer normierten Geschwindigkeit in einer Ebene;
- einer Krümmung in einer Ebene;
- einer Höhe des erfassten Luftfahrzeugs;
- einer vertikalen Geschwindigkeit des erfassten Luftfahrzeugs;
- einer vertikalen Beschleunigung des erfassten Luftfahrzeugs.

**3.** Identifikationsvorrichtung (14) nach Anspruch 1 oder 2, wobei eine Eingangsvariable des neuronalen Netzes (32) eine radaräquivalente Fläche des erfassten Luftfahrzeugs ist.

**4.** Identifikationsvorrichtung (14) nach einem der vorhergehenden Ansprüche, wobei das Verarbeitungsmodul (18) dazu ausgelegt ist, Flugbahndaten zu unterabtasten und mindestens ein verarbeitetes Signal bereitzustellen, das unterabgetastete Flugbahndaten umfasst.

**5.** Identifikationsvorrichtung (14) nach Anspruch 4, wobei das Verarbeitungsmodul (18) dazu ausgelegt ist, Flugbahndaten nach vordefinierten Frequenzen zu filtern, wobei das verarbeitete Signal ferner gefilterte Flugbahndaten umfasst.

**6.** Identifikationsvorrichtung (14) nach einem der vorhergehenden Ansprüche, wobei die sich auf den Luftfahrzeugtyp beziehende Angabe eine Wahrscheinlichkeit der Zugehörigkeit zu jedem der Typen aus der vordefinierten Gruppe von Luftfahrzeugtypen umfasst.

**7.** Überwachungssystem (10), umfassend eine Identifikationsvorrichtung (14) nach einem der vorhergehenden Ansprüche, wobei das Überwachungssystem (10) ferner mindestens einen Bildsensor (12) umfasst, der dazu ausgelegt ist, eine Reihe von Bildern eines Luftraums aufzunehmen und die Reihe von Bildern an die Identifikationsvorrichtung (14) zu übertragen.

**8.** Verfahren zur Identifizierung eines Luftfahrzeugtyps, wobei das Identifizierungsverfahren von einer Identifizierungsvorrichtung (14) durchgeführt wird und umfasst:

- das Definieren einer Vielzahl von Zeitfenstern unterschiedlicher Länge und das Abtasten der Flugbahndaten in jedem Zeitfenster über eine vordefinierte Anzahl von Abtastungen N;
- das Generieren von Flugbahndaten eines erfassten Luftfahrzeugs aus einer Reihe von Bildern, die von einem Bildsensor (12) aufgenommen wurden;
- das Bestimmen, über ein neuronales Netz (32), mindestens eine Angabe zu einem Luftfahrzeugtyp aus einer vorbestimmten Gruppe von Luftfahrzeugtypen, wobei eine Eingangsvariable des neuronalen Netzes (32) die Flugbahndaten des erfassten Luftfahrzeugs umfasst, wobei mindestens eine Ausgangsvariable des neuronalen Netzes (32) die Angabe zu dem Luftfahrzeugtyp ist, und
- das Identifizieren des Luftfahrzeugtyps in Abhängigkeit von der Angabe, die sich auf den Luftfahrzeugtyp bezieht.

**9.** Rechnerprogramm, das Softwarebefehle aufweist, die, wenn sie von einem Rechner ausgeführt werden, ein Verfahren zur Identifizierung eines Luftfahrzeugtyps nach vorhergehendem Anspruch durchführen und das von einer Identifizierungsvorrichtung nach den Ansprüchen 1 bis 7 durchgeführt wird.

**Claims**

**1.** Aircraft type identification device (14) comprising:

- a determination module (20) configured to determine, via a neural network (32), at least one datum relating to an aircraft type from a predefined set of aircraft types, an input variable of the neural network (32) comprising trajectory data of a detected aircraft, at least one output variable of the neural network (32) being the datum relating to the aircraft type, and
- an identification module (22) configured to identify the aircraft type as a function of the data relating to the aircraft type,

- a processing module (18), arranged upstream of the determination module (20), the processing module (18) being configured to define a plurality of time windows of different durations, and to sample the trajectory data in each time window over a predefined number of samples N,

the identification device (14) further comprising a generation module (16) configured to generate the trajectory data of the detected aircraft from a series of images taken by an image sensor (12).

2. An identification device (14) as claimed in claim 1, wherein the trajectory data comprises a set of kinematic parameter(s) of the detected aircraft, each kinematic parameter being an element selected from the group consisting of:

   - three-dimensional speed;
   - a three-dimensional curvature of the trajectory of the detected aircraft;
   - a three-dimensional twist of the trajectory of the detected aircraft;
   - a standardised speed in a plane;
   - a curvature in a plane;
   - an altitude of the detected aircraft;
   - a vertical speed of the detected aircraft;
   - a vertical acceleration of the detected aircraft.

3. An identification device (14) according to claim 1 or 2, in which an input variable of the neural network (32) is a radar equivalent surface of the detected aircraft.

4. An identification device (14) according to any one of the preceding claims, wherein the processing module (18) is configured to subsample trajectory data and to provide at least one processed signal comprising subsampled trajectory data.

5. An identification device (14) according to claim 4, wherein the processing module (18) is configured to filter trajectory data according to predefined frequencies, the processed signal further comprising filtered trajectory data.

6. An identification device (14) according to any one of the preceding claims, in which the data relating to the aircraft type comprises a probability of belonging to each of the types of the predefined set of aircraft types.

7. A surveillance system (10) comprising an identification device (14) according to any of the preceding claims, the surveillance system (10) further comprising at least one image sensor (12) configured to take a series of images of an airspace and to transmit the series of images to the identification device (14).

8. A method of identifying an aircraft type, the identification method being implemented by an identification device (14), and comprising:

   - the definition of several time windows of different durations, and sampling the trajectory data in each time window over a predefined number of samples N;
   - the generation of trajectory data for a detected aircraft from a series of images taken by an image sensor (12);
   - the determination, via a neural network (32), of at least one datum relating to an aircraft type from a predefined set of aircraft types, an input variable of the neural network (32) comprising the trajectory data of the detected aircraft, at least one output variable of the neural network (32) being the datum relating to the aircraft type, and
   - the identification of the aircraft type according to the data relating to the aircraft type.

9. A computer programme comprising software instructions which, when run by a computer, implement a method of identifying a type of aircraft according to the preceding claim and which is implemented by an identification device according to claims 1 to 7.

## FIG.1

## FIG.2

EP 3 722 830 B1

Apprentissage — 100

Exploitation

110

Prise d'images — 120

Génération des données — 130

Prétraitement — 140

Détermination — 150

Identification — 160

## FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **THAI et al.** *Detection, tracking and classification of aircraft and drones in digital towers using machine learning on motion patterns*